# FASCICULE DE BREVET EUROPEEN

(11) **EP 1 595 084 B1**
(45) Date de publication et mention de la délivrance du brevet: **20.09.2006**
(21) Numéro de dépôt: 04711396.4
(22) Date de dépôt: 16.02.2004
(51) Int. Cl.: F16D 21/06, F16D 25/12

(54) **DISPOSITIF COMPORTANT UN MODULE D'EMBRAYAGE/DE DEBRAYAGE CENTRE**
VORRICHTUNG MIT ZENTRIERTER KUPPLUNGSEINHEIT
DEVICE COMPRISING A CENTRED CLUTCH/CLUTCH RELEASE MODULE

(30) Priorité: 20.02.2003 FR 0302121
(43) Date de publication de la demande: 16.11.2005
(73) Titulaire: VALEO EMBRAYAGES, 80009 Amiens Cedex 1 (FR)
(72) Inventeur: THERY, Pascal, F-80000 Amiens (FR)
(74) Mandataire: Vignesoult, Serge L. M.
(86) Numéro de dépôt international: PCT/FR2004/050062
(87) Numéro de publication internationale: WO 2004/076882

(56) Documents cités:
- DE-A- 3 838 307
- DE-A- 4 014 471
- DE-A- 19 746 281
- FR-A- 2 774 440
- US-A1- 2003 010 595
- US-B1- 6 499 578

## Description

L'invention concerne un dispositif d'embrayage/de débrayage entre un arbre menant relié à un moteur de véhicule et au moins un arbre mené d'une boîte de vitesses et qui comporte un module d'embrayage/de débrayage pour l'accouplement et le désaccouplement entre l'arbre menant et l'arbre mené, un tel dispositif est décrit dans le document US 6 499 578 B1 et DE 4 014 471.

De manière connue, le module d'embrayage/de débrayage du dispositif visé ci-dessus est centré sur un volant appelé volant moteur par l'intermédiaire de vis de fixation et de centrage.

Ce volant est monté de façon centrée sur l'arbre menant relié au moteur du véhicule.

Le volant moteur peut être rigide, donnant ainsi lieu à une forte rigidité axiale, c'est-à-dire parallèlement aux arbres menant et mené, ou bien flexible.

Le document FR 2 774 440 décrit un tel embrayage dans lequel le volant moteur est flexible, c'est-à-dire qu'il est constitué d'une tôle flexible liée à l'arbre menant qu'est le vilebrequin et d'un volant rigide fixé du côté de la tôle flexible opposé au moteur.

Le caractère flexible de la tôle procure une faible rigidité axiale et donne ainsi naissance à deux modes de vibration : le mode de vibration par pompage qui s'analyse comme un déplacement de la tôle parallèlement à elle-même et le mode de vibration par flexion qui se définit par une oscillation de la tôle autour d'un axe perpendiculaire à l'axe de l'arbre menant.

Par ailleurs, l'unité de commande d'organes d'embrayage/de débrayage du module d'embrayage est fixée sur le couvercle de l'embrayage et, ainsi, les efforts exercés par le ou les actionneurs de l'unité de commande sont directement repris par le couvercle d'embrayage.

La Demandèresse a pu constater que les combustions qui ont lieu dans le moteur sont transmises au volant moteur par l'intermédiaire du vilebrequin qui présente en soi une certaine flexibilité.

Que ce volant moteur soit rigide ou bien flexible, les vibrations transmises par le vilebrequin provoquent des oscillations du volant.

Lorsque le volant est de type flexible comme dans le document FR 2 774 440, il se crée un découplage entre la masse du volant et celle du vilebrequin, ce qui a pour effet de décaler la fréquence de résonance du vilebrequin vers les hautes fréquences, réduisant ainsi les nuisances sonores.

Cependant, le volant et donc le module d'embrayage/de débrayage restent soumis à un phénomène d'oscillations.

En outre, dans le cas où l'actionneur est fixé au couvercle d'embrayage, l'actionneur est soumis aux vibrations du couvercle suivant une amplitude qui dépend de la distance dudit actionneur à l'axe de flexion du volant dans le mode de vibration par flexion.

Cette distance est plus grande lorsque l'embrayage est un double embrayage.

Les vibrations transmises au module d'embrayage/de débrayage et donc à l'actionneur peuvent être critiques pour ce dernier, occasionnant des usures par frottement, par exemple, sur les guidages du piston de l'actionneur hydraulique et des joints.

La présente invention vise à remédier à au moins un des inconvénients précités en proposant un dispositif d'embrayage/de débrayage entre un arbre menant relié à un moteur de véhicule et au moins un arbre mené d'une boîte de vitesses comportant un module d'embrayage/de débrayage pour l'accouplement et le désaccouplement entre l'arbre menant et l'arbre mené, caractérisé en ce que le dispositif comporte :
- des moyens de centrage dits avant du module d'embrayage/de débrayage sur l'arbre menant,
- des moyens de centrage dits arrière (100) du module d'embrayage/de débrayage sur la boîte de vitesses, le module d'embrayage/de débrayage étant lié à l'arbre menant et maintenu axialement dans les deux sens par l'intermédiaire de cette liaison.

En centrant à l'avant et à l'arrière le module d'embrayage/de débrayage, on effectue ainsi un calage de ce dernier suivant un axe défini par l'arbre menant d'un côté et par l'arbre mené de l'autre côté.

Ce calage est assuré malgré un éventuel défaut d'alignement entre les axes des arbres menant et mené.

Selon l'invention, le module est en position axiale par rapport à l'arbre menant, et ce, sans possibilité de coulissement axial dans un sens ou dans l'autre. Ce calage axial est réalisé simplement et de manière interne au dispositif, sans prendre appui sur un carter du moteur ou de la boîte de vitesses car la position de cet appui est sujette à une dispersion de position par rapport à l'extrémité de l'arbre menant.

En définissant ainsi l'axe fixe précité et en maintenant axialement le module par sa liaison avec l'arbre menant afin de limiter, voire d'empêcher, tout débattement axial dudit module, ce dernier est moins réceptif aux vibrations qu'auparavant.

Selon une caractéristique, le dispositif selon l'invention comporte au moins une pièce de liaison flexible entre le module d'embrayage/de débrayage et l'arbre menant.

Comme l'axe est fixe et qu'une liaison flexible est prévue entre le module d'embrayage/de débrayage et l'arbre menant, le module d'embrayage/de débrayage est découplé des oscillations de l'arbre menant.

Selon une caractéristique, le module d'embrayage/de débrayage porte au moins une unité de commande d'au moins un organe d'embrayage/de débrayage pour l'accouplement et le désaccouplement entre l'arbre menant et l'arbre mené.

Lorsque l'unité de commande est portée par le module d'embrayage/de débrayage, elle se trouve ainsi protégée contre l'usure, notamment l'usure générée par les frottements induits par les vibrations transmises par l'arbre menant.

On a également pu constater avec l'invention une plus grande stabilité du point de fonctionnement de l'unité de commande.

En effet, il n'y a plus de risque de dérive due à un actionneur qui se déplacerait seul sous l'effet des vibrations.

Selon une caractéristique, l'unité de commande est montée sur le module d'embrayage/de débrayage par l'intermédiaire d'au moins un palier et les moyens de centrage arrière assurent le centrage arrière de l'unité de commande.

Selon une caractéristique, les moyens de centrage arrière comportent un élément de centrage fixé à une extrémité à la boîte de vitesses et comportent au moins une partie chanfreinée.

La partie chanfreinée peut être prévue sur l'élément de centrage ou sur la pièce du module d'embrayage/de débrayage qui coopère avec l'élément de centrage.

Cette partie chanfreinée facilite l'accostage du module d'embrayage/de débrayage et de la boîte de vitesses car, généralement, l'opérateur qui effectue ce montage a une visibilité réduite, voire nulle.

Lorsque l'unité de commande est assujettie au module, il est prévu un moyen de positionnement angulaire, soit directement entre l'unité de commande et le carter de la boîte de vitesses, par exemple, par coopération de formes complémentaires agencées respectivement sur l'unité de commande et sur le carter, soit par l'intermédiaire des moyens de centrage arrière.

Selon une caractéristique, la pièce de liaison flexible est une tôle flexible montée sur l'arbre menant, d'une part, et sur un volant de transmission de couple du module d'embrayage/de débrayage, d'autre part.

Selon une autre caractéristique, le centrage avant du module d'embrayage/de débrayage est assuré par le montage de la tôle flexible sur le volant.

Ainsi, c'est la liaison entre la tôle flexible et le volant qui assure le centrage avant du module d'embrayage/de débrayage sur l'arbre menant.

Le centrage est, par exemple, réalisé par l'intermédiaire de goupilles de positionnement, de vis, d'un ou de plusieurs épaulements ...

Selon une caractéristique, le centrage avant du module d'embrayage/de débrayage est assuré directement entre ledit module d'embrayage/de débrayage et l'arbre menant.

Par exemple, les moyens de centrage avant comportent un plot de centrage d'un volant de transmission de couple du module d'embrayage/de débrayage.

Selon une caractéristique, le module d'embrayage/de débrayage comprend un double volant amortisseur qui comporte un volant primaire relié à l'arbre menant et un volant secondaire apte à être relié à l'arbre mené.

Ce système de double volant amortisseur, en baissant la fréquence propre d'oscillation angulaire du système en aval par rapport aux ressorts amortisseurs, apporte une qualité de filtration des vibrations torsionnelles générées par les successions de combustions dans le moteur thermique.

Selon une autre caractéristique, le volant primaire est centré sur l'arbre menant et des moyens de centrage du volant secondaire sur le volant primaire sont, en outre, prévus.

Ce centrage du volant secondaire se fait par un palier qui permet l'oscillation relative des deux volants l'un par rapport à l'autre.

Selon une caractéristique, le module d'embrayage/de débrayage et l'unité de commande, lorsque celle-ci est portée par ledit module, sont montés avec un jeu axial du côté de l'arbre menant et du côté de l'arbre mené.

L'ensemble est ainsi libre axialement et le positionnement axial de cet ensemble est assuré par la pièce de liaison flexible qui n'est soumise à aucune contrainte axiale.

Selon une autre caractéristique, le module d'embrayage/de débrayage et l'unité de commande, lorsque celle-ci est portée par ledit module, sont en appui axial du côté de l'arbre menant.

Ceci permet de limiter les vibrations.

Selon une caractéristique, l'appui axial est assuré par une contrainte exercée sur une pièce flexible. Cette pièce interne au module est, par exemple, légèrement précontrainte axialement au montage.

Selon une caractéristique, un centrage élastique de type radial est prévu, que l'on ait un jeu axial de part et d'autre du module d'embrayage/de débrayage ou d'un seul côté.

Le serrage élastique radial évite de prendre du jeu et de l'usure.

L'invention a également pour objet un procédé d'assemblage d'un module d'embrayage/de débrayage avec un arbre menant relié à un moteur de véhicule et une boîte de vitesses, caractérisé en ce qu'il comporte les étapes suivantes :
- montage et centrage du module d'embrayage/de débrayage sur la boîte de vitesses,
- montage sur l'arbre menant d'au moins une pièce de liaison entre le module d'embrayage/de débrayage et l'arbre menant,
- accostage de la boîte de vitesses sur le moteur, ce qui assure le centrage du module d'embrayage/de débrayage sur l'arbre menant,
- fixation du module d'embrayage/de débrayage sur la pièce de liaison. Ce montage permet de préparer un sous-ensemble formé par le module et comportant les principales fonctions, ce qui simplifie les manipulations.

Selon une variante, la pièce de liaison est flexible.

Selon une caractéristique, le module d'embrayage/de débrayage portant au moins une unité de commande d'au moins un organe d'embrayage/de débrayage pour l'accouplement et le désaccouplement entre l'arbre menant et l'arbre mené, le centrage du module d'embrayage/de débrayage par rapport à la boîte de vitesses est effectué par l'intermédiaire de l'unité de commande qui est centrée sur la boîte de vitesses.

Selon un autre aspect, l'invention vise un procédé d'assemblage d'un module d'embrayage/de débrayage avec un arbre menant relié à un moteur de véhicule et une boîte de vitesses, caractérisé en ce qu'il comporte les étapes suivantes :
- montage sur l'arbre menant d'au moins une pièce de liaison entre le module d'embrayage/de débrayage et l'arbre menant,
- centrage du module d'embrayage/de débrayage sur l'arbre menant,
- fixation du module d'embrayage/de débrayage sur la pièce de liaison, cette fixation pouvant se faire par des vis accessibles du côté du moteur ou du côté de la boîte de vitesses,
- accostage de la boîte de vitesses et du module d'embrayage/de débrayage et centrage de ces deux éléments.

Ce montage permet de préparer un sous-ensemble formé par le module et comportant les principales fonctions.

Selon ce procédé, on monte de façon très simple l'ensemble des différentes pièces sur le compartiment moteur, le, centrage arrière du module d'embrayage/de débrayage par rapport au carter de la boîte de vitesses étant effectué lors de l'accostage entre ces deux derniers éléments.

Selon une caractéristique, la pièce de liaison est flexible.

D'autres caractéristiques et avantages apparaîtront au cours de la description qui va suivre, donnée uniquement à titre d'exemple non limitatif et faite en référence aux dessins annexés, sur lesquels :
- la figure 1 est vue partielle en coupe d'un dispositif d'embrayage/de débrayage selon un premier exemple de réalisation de l'invention;
- la figure 2 est une vue schématique partielle d'un dispositif d'embrayage/de débrayage selon un deuxième exemple de réalisation de l'invention ;
- la figure 3 est une vue schématique partielle d'un dispositif d'embrayage/de débrayage selon un troisième exemple de réalisation de l'invention ;

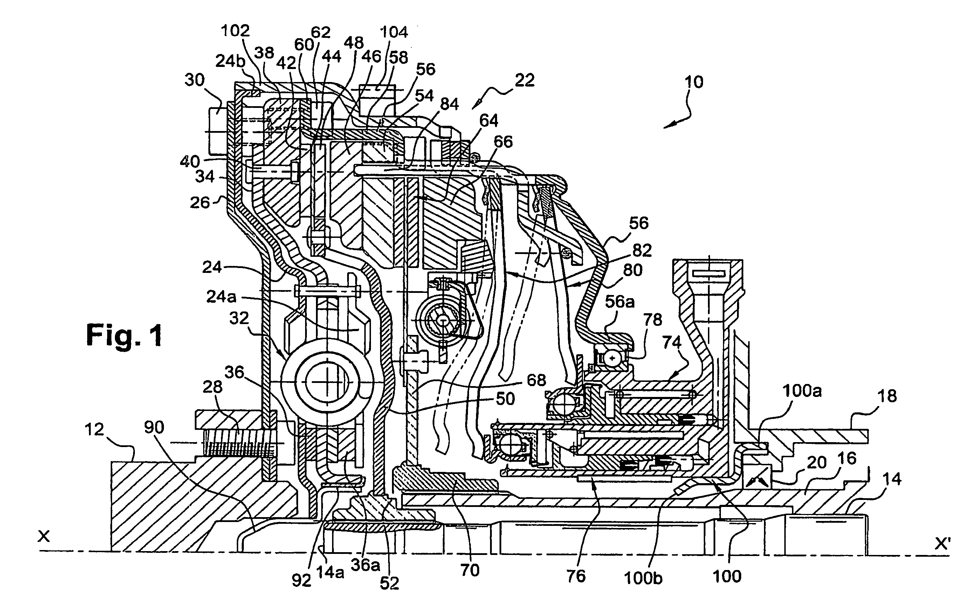

Comme représenté et désigné à la figure 1 par la référence générale notée 10, un dispositif d'embrayage/de débrayage selon un premier exemple de réalisation de l'invention est un embrayage double dans la mesure où il est apte à entraîner, à partir d'un arbre menant 12 qui est ici le vilebrequin d'un moteur à combustion interne d'un véhicule automobile, deux arbres menés, un arbre 14 et un arbre creux 16 entourant l'arbre 14.

Comme représenté sur la figure 1, l'arbre mené intérieur 14 traverse le carter 18 de la boîte de vitesses et présente une extrémité libre 14a qui s'étend axialement suivant l'axe longitudinal du vilebrequin 12 en direction de ce dernier.

Par ailleurs, l'arbre mené tubulaire 16 est soutenu et centré par un moyen de roulement, non représenté, qui est porté intérieurement par le carter de la boîte de vitesses 18, un joint d'étanchéité 20 assurant la fermeture de la boîte qui contient de l'huile.

Le dispositif d'embrayage/de débrayage selon l'invention comprend un module d'embrayage/de débrayage 22 qui comporte un double volant amortisseur (volant primaire et volant secondaire).

Le volant primaire du double volant comporte une rondelle 24 solidaire d'une pièce de liaison flexible 26, par exemple, réalisée sous la forme d'une tôle flexible emboutie qui est elle-même montée sur le vilebrequin 12, perpendiculairement à l'axe de symétrie axiale X-X' du dispositif d'embrayage monté rotatif autour de cet axe, par l'intermédiaire de vis de fixation 28.

La pièce de liaison flexible 26 est rendue solidaire de la rondelle 24 par des vis de fixation 30 prévues à la périphérie externe de la pièce 26, ainsi que par les vis 28 à sa périphérie interne.

De façon connue, la rondelle 24 est montée en entrée d'un système d'amortissement par torsion 32 connu en soi et qui ne sera donc pas décrit ici. La rondelle 24 comporte également une autre partie 24a qui est solidaire de la rondelle 24 par l'intermédiaire d'entretoises serties.

Le module d'embrayage/de débrayage 22 comporte également un voile 34 du volant secondaire qui est monté en sortie du système d'amortissement 32.

Des rondelles de frottement 36 et 36a sont agencées entre la rondelle 24, 24a et le voile 34 du volant secondaire dans la partie située entre le système d'amortissement 32 et l'axe de rotation X-X' du moteur.

Les rondelles assurant un calage ou maintien axial entre le volant primaire et le volant secondaire.

Le volant primaire comporte aussi un anneau formé dans une tôle 102, cet anneau étant fixé par soudure sur un retour 24b de la rondelle 24. L'anneau 102 reçoit une couronne dentée 104 qui permet l'engrènement d'un pignon du démarreur électrique.

Le voile 34 en forme de disque embouti est fixé sur un plateau de réaction 38 appelé premier plateau de réaction du premier mécanisme d'embrayage, par l'intermédiaire des rivets de fixation 40.

Ce premier plateau de réaction 38 se présente sous la forme d'une couronne qui possède une face agencée contre le voile 34 et une face opposée destinée à venir en contact avec l'une des garnitures de friction 42 du premier disque de friction 44.

Le premier mécanisme d'embrayage du module d'embrayage/de débrayage 22 comprend également un premier plateau de pression 46 qui est susceptible de se déplacer axialement sous l'action d'organes d'embrayage/de débrayage, qui seront brièvement décrits ultérieurement, pour venir en contact avec l'autre garniture de friction 48 du disque de friction 44 et ainsi serrer les garnitures de friction de ce disque.

Le disque de friction 44 est relié par un voile 50 à un moyeu 52 à cannelures internes longitudinales pour entraîner en rotation l'arbre intérieur mené 14 lorsque le premier mécanisme d'embrayage est en position embrayée et que les garnitures de friction du disque de friction 44 sont serrées entre les faces en regard des plateaux 38 et 46.

Un second mécanisme d'embrayage faisant partie du module d'embrayage/de débrayage 22 et qui est entraîné par le vilebrequin 12 est adjacent au premier mécanisme d'embrayage qui vient d'être décrit. Le second mécanisme comprend un deuxième plateau de réaction 54 solidaire du premier plateau de réaction 38 du premier mécanisme d'embrayage par l'intermédiaire d'une pièce formant couvercle 56 et qui est située à la périphérie du module d'embrayage/de débrayage22.

Cette pièce 56 présente une portion longitudinale parallèle à l'axe X-X' formant une jupe 58 sur laquelle est monté le deuxième plateau de réaction 54 et comporte à son extrémité la plus proche du moteur un rebord annulaire 60 perpendiculaire à la jupe 58 et qui est fixé au premier plateau de réaction 38 par l'intermédiaire de vis de fixation 62.

Le second mécanisme d'embrayage comporte un deuxième disque de friction 64 agencé entre le deuxième plateau de réaction 54 fixe et un deuxième plateau de pression 66 mobile.

Le disque de friction 64 est relié par l'intermédiaire d'un voile 68 à un moyeu 70 à cannelures internes longitudinales, permettant ainsi d'entraîner en rotation l'arbre mené tubulaire 16 lorsque les garnitures de friction du second disque de friction 64 sont serrées entre les faces en regard des plateaux 54 et 66.

Le couvercle dit d'embrayage en forme générale de cloche 56 est troué à son sommet dans sa partie centrale la plus proche de l'axe X-X', afin de recevoir les actionneurs, par exemple, hydrauliques de l'unité de commande du module d'embrayage/de débrayage.

Les deux actionneurs 74, 76 de l'unité de commande sont fixés au couvercle d'embrayage et donc au module d'embrayage/de débrayage par l'intermédiaire d'un moyen de roulement 78 porté par un rebord intérieur annulaire 56a du couvercle 56.

Ces actionneurs agissent sur des organes d'embrayage/de débrayage 80, 82 qui se présentent sous la forme de leviers agencés, par exemple, en étoile sur une partie annulaire qui s'apparente à une rondelle Belleville, lesdits leviers étant articulés respectivement sur des points fixes du couvercle d'embrayage 56.

On a représenté sur la figure 1 les actionneurs et les organes d'embrayage/de débrayage dans deux positions extrêmes correspondant respectivement à une position embrayée et à une position débrayée.

On notera que le premier actionneur 74 agit sur l'organe 80 en poussant ce dernier pour venir déplacer axialement un poussoir 84 en direction du moteur suivant l'axe longitudinal X-X' afin d'amener en contact le premier plateau de pression 46 avec l'une des garnitures de friction du premier disque de friction 44.

L'autre actionneur 76 vient quant à lui pousser l'organe 82 afin de déplacer axialement en direction du moteur le second plateau de pression 66 pour venir en contact avec l'une des garnitures de friction du second disque de friction 64.

Dans cette position, le dispositif d'embrayage/de débrayage selon l'invention est en position embrayée.

Dans la configuration représentée sur la figure 1, la rondelle 24 du module d'embrayage/de débrayage est fixé à la tôle flexible 26 par les moyens de fixation 30 sans qu'un centrage particulier du volant par rapport à la tôle ne soit réalisé, ce qui permet de faciliter cette opération de montage.

Le centrage du module d'embrayage/de débrayage 22 est réalisé, en partie, par le centrage de la rondelle 24 portant le volant primaire sur le vilebrequin 12 par l'intermédiaire d'un plot de centrage 90 inséré dans un évidement axial pratiqué à l'extrémité du vilebrequin qui est tournée vers la boîte de vitesses et, en partie, par le centrage du volant secondaire 34 par rapport au volant primaire 24 par l'intermédiaire d'un palier de centrage 92. Le plot 90 est solidaire de la rondelle 24.

Le palier de centrage 92 est agencé parallèlement à l'axe longitudinal X-X' entre une partie formant retour du volant secondaire 34 et une jupe annulaire du plot de centrage 90 située dans sa partie la plus large.

On notera que la rondelle 24 est agencée entre une partie formant épaulement du plot de centrage 90 et l'extrémité du vilebrequin 12, avec un jeu axial entre les pièces 24 et 12.

Ainsi, le volant primaire du module d'embrayage/de débrayage est centré sur le vilebrequin et le volant secondaire est quant à lui centré sur le volant primaire.

Par ailleurs, les actionneurs 74 et 76 de l'unité de commande du module d'embrayage/de débrayage sont centrés sur le carter 18 de la boîte de vitesses par l'intermédiaire de moyens de centrage dits arrière.

Les moyens de centrage arrière sont, par exemple, réalisés sous la forme d'un élément de centrage 100 fixé à une extrémité du carter de la boîte de vitesses et qui comporte une partie chanfreinée à son extrémité opposée agencée en regard du module d'embrayage/de débrayage.

L'élément 100 se présente, par exemple, sous la forme d'une tôle emboutie en forme générale de cloche dont !a base annulaire constituant la partie la plus large 100a est insérée dans une rainure circulaire parallèle à l'axe longitudinal X-X' du carter 18 par une de ses extrémités 100a et qui présente un chanfrein à la partie opposée 100b inclinée suivant l'axe longitudinal X-X'.

Cette partie chanfreinée facilite le montage en aveugle du module d'embrayage sur le carter de la boîte de vitesses. Un jeu axial est assuré entre l'élément 100 et les actionneurs 74 et 76.

La présence des moyens de centrage avant et arrière ainsi que le flexibilité de la pièce de liaison 26 permettent d'éviter des problèmes de vibration transmises par le vilebrequin 12 et leurs conséquences néfastes pour le module d'embrayage/de débrayage et pour son unité de commande et notamment ses actionneurs.

De façon non représentée sur la figure 1, un moyen de positionnement angulaire des actionneurs peut être prévu, soit directement entre ceux-ci et le carter de la boîte de vitesses, soit entre ces derniers et les moyens de centrage arrière 100.

Un tel moyen est, par exemple, constitué par un ou plusieurs bossages et évidements de formes complémentaires.

En variante de la figure 1, le module d'embrayage/de débrayage et les actionneurs de l'unité de commande peuvent être montés sans jeu axial. Le jeu prévu entre les pièces 24 et 12 est annulé et il est prévu une "cote négative" pour garantir un appui axial permanent (mise en contrainte de la pièce 26), ce qui est rendu possible de par l'élasticité de la tôle flexible 26 qui est en appui sur le vilebrequin 12. La tôle flexible présente ainsi une légère contrainte axiale lors de l'opération d'assemblage.

Pour l'assemblage du dispositif d'embrayage/de débrayage représenté à la figure 1, on procède, par exemple, de la manière suivante :
- le module d'embrayage/de débrayage 22 est centré sur le carter 18 de la boîte de vitesses par l'intermédiaire des actionneurs 74 et 76 et de la pièce de centrage arrière 100,
- la pièce de liaison 26 est montée sur le vilebrequin 12,
- lors de l'accostage de la boîte sur le moteur, le module d'embrayage/de débrayage 22 est centré sur le vilebrequin 12 comme on l'a vu ci-dessus par l'intermédiaire, d'une part, de son volant primaire 24 et, d'autre part, de son volant secondaire centré lui-même sur le volant primaire,
- le module d'embrayage/de débrayage est ensuite fixé sur la pièce de liaison flexible 26 par l'intermédiaire des organes de fixation 30.

On notera que dans la configuration représentée sur la figure 1 les moyens de fixation entre la tôle flexible 26 et le volant primaire, notamment les vis de fixation, sont serrés sans positionnement précis dans la mesure où le volant primaire est centré grâce au plot de centrage 90.

On notera toutefois que, selon une variante, la tôle flexible 26 peut assurer ce centrage à la place du plot de centrage 90 ou en complément de ce dernier.

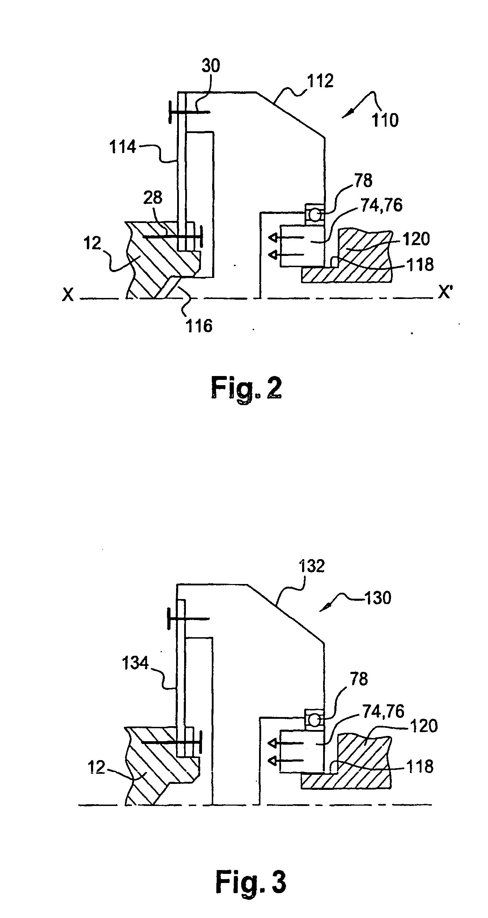

La **figure 2** illustre un autre exemple de réalisation d'un dispositif d'embrayage/de débrayagedans lequel les éléments inchangés par rapport à ceux du dispositif de la figure 1 et qui sont repris ici porteront les mêmes références.

Suivant cet exemple, le dispositif 110 comprend un module d'embrayage/de débrayage112 constitué d'un double mécanisme d'embrayage qui n'est pas détaillé ici.

A titre de variante, il peut également s'agir d'un mécanisme d'embrayage simple.

Un ensemble constitué de deux actionneurs 74 et 76 analogues à ceux représentés sur la figure 1 sont reliés au module d'embrayage/de débrayage 112 par l'intermédiaire d'un moyen de roulement 78 porté par le couvercle d'embrayage de ce dernier.

Dans cette configuration, le module d'embrayage/de débrayage ne comporte pas de double volant amortisseur comme sur la figure 1.

Une pièce de liaison flexible 114 est montée sur le vilebrequin 12 perpendiculairement à l'axe X-X' de rotation du moteur.

Le module d'embrayage/de débrayage 112 est centré sur le vilebrequin 12 par l'intermédiaire de moyens de centrage avant 116, tels qu'un plot de centrage analogue au plot de centrage 90 de la figure 1.

Des moyens de centrage arrière 118 sont également prévus pour assurer le centrage du module d'embrayage/de débrayage 112 et qui portent des actionneurs 74 et 76 par rapport au carter 120 de la boîte de vitesses.

Comme représenté de façon très schématique sur la figure 2, les moyens de centrage arrière sont réalisés par un épaulement 118 provenant du carter 120 de la boîte de vitesses.

Selon une variante non représentée, le centrage arrière du module d'embrayage/de débrayage 112 avec le carter 120 de la boîte de vitesses pourrait être réalisé par un moyen de roulement agencé entre ledit module et le carter lorsque l'unité de commande du module et, plus particulièrement les actionneurs 74 et 76, ne sont pas fixés à ce dernier.

Selon une autre variante, non représentée, les moyens de centrage arrière pourraient comporter un moyen de rattrapage de jeu radial constitué, par exemple, par des pattes permettant d'assurer un serrage élastique et qui assurent ainsi un centrage sans jeu du module d'embrayage/de débrayage sur le carter de la boîte de vitesses.

Là encore, lorsque l'unité de commande du module d'embrayage est portée par ce dernier, les moyens de centrage arrière coopèrent avec ladite unité de commande.

Selon un autre exemple de réalisation illustré de façon schématique à la **figure 3,** le dispositif d'embrayage/de débrayage 130 diffère de celui représenté à la figure 2 par le fait que le module d'embrayage/de débrayage 132 est centré non plus par l'intermédiaire d'un plot de centrage comme sur la figure 2, mais grâce à la pièce de liaison flexible 134, par exemple, une tôle flexible.

Ainsi, comme représenté de façon très schématique sur la figure 3, la liaison entre la tôle flexible 134 et le volant de transmission de couple du module d'embrayage/de débrayage132 assure un centrage de ce dernier.

Dans l'exemple de la figure 3, le centrage avant est assuré par un épaulement porté intérieurement par le module d'embrayage/de débrayage 132 et qui coopère avec le diamètre extérieur de la tôle flexible 134.

D'autres moyens de centrage peuvent être réalisés et, notamment, par l'intermédiaire de goupilles de positionnement, de vis...

On notera que pour tous les exemples décrits ci-dessus, un calage angulaire de l'unité de commande portée par le module d'embrayage/de débrayage et plus particulièrement des actionneurs de cette unité de commande peut être réalisé en plus du centrage arrière.

Un tel calage angulaire peut être réalisé directement par l'intermédiaire de la pièce de centrage arrière ou par des moyens additionnels.

## Revendications

1. Dispositif d'embrayage/de débrayage entre un arbre menant (12) relié à un moteur de véhicule et au moins un arbre mené (14, 16) d'une boîte de vitesses comportant un module d'embrayage/de débrayage (22) pour l'accouplement et le désaccouplement entre l'arbre menant et l'arbre mené, **caractérisé en ce que** le dispositif comporte :
- des moyens de centrage dits avant (90) du module d'embrayage/de débrayage sur l'arbre menant,
- des moyens de centrage dits arrière (100) du module d'embrayage/de débrayage sur la boîte de vitesses, le module d'embrayage/de débrayage étant lié à l'arbre menant et maintenu axialement dans les deux sens par l'intermédiaire de cette liaison.

2. Dispositif d'embrayage/de débrayage selon la revendication 1, **caractérisé** et ce qu'il comporte au moins une pièce de liaison flexible (26) entre le module d'embrayage/de débrayage et l'arbre menant.

3. Dispositif d'embrayage/de débrayage selon la revendication 1 ou 2, **caractérisé en ce que** le module d'embrayage/de débrayage porte au moins une unité de commande (74, 76) d'au moins un organe d'embrayage/de débrayage (80, 82) pour l'accouplement et le désaccouplement entre l'arbre menant et l'arbre mené.

4. Dispositif d'embrayage/de débrayage selon la revendication 3, **caractérisé en ce que** l'unité de commande est montée sur le module (22) par l'intermédiaire d'au moins un palier et les moyens de centrage arrière (100) assurent le centrage arrière de l'unité de commande.

5. Dispositif d'embrayage/de débrayage selon l'une des revendications 1 à 4, **caractérisé en ce que** les moyens de centrage arrière comportent un élément de centrage fixé à une extrémité (100a) à la boîte de vitesses (18) et comportent au moins une partie chanfreinée (100b).

6. Dispositif d'embrayage/de débrayages selon l'une des revendications 3, 4, **caractérisé en ce qu'**un moyen de positionnement angulaire de l'unité de commande est prévu.

7. Dispositif d'embrayage/de débrayage selon la revendication 2, **caractérisé en ce que** la pièce de liaison flexible est une tôle flexible (26) montée sur l'arbre menant (12), d'une part, et sur un volant de transmission de couple (24) du module d'embrayage/de débrayage, d'autre part

8. Dispositif d'embrayage/de débrayage selon la revendication 7, **caractérisé en ce que** le centrage avant du module d'embrayage/de débrayage est assuré par le montage de la tôle flexible sur le volant.

9. Dispositif d'embrayage/de débrayage selon l'une des revendications 1 à 7, **caractérisé en ce que** le centrage avant du module d'embrayage/de débrayage est assuré directement entre ledit module d'embrayage/de débrayage et l'arbre menant.

10. Dispositif d'embrayage/de débrayage selon la revendication 9, **caractérisé en ce que** les moyens de centrage avant comportent un plot de centrage (90) d'un volant de transmission de couple (24) du module d'embrayage/de débrayage.

11. Dispositif d'embrayage/de débrayage selon l'une des revendications 1 à 10, **caractérisé en ce que** le module d'embrayage/de débrayage comprend un double volant amortisseur qui comporte un volant primaire (24) relié à l'arbre menant et un volant secondaire (34) apte à être relié à l'arbre mené.

12. Dispositif d'embrayage/de débrayage selon la revendication 11, **caractérisé en ce que** le volant primaire (24) est centré sur l'arbre menant (12) et des moyens de centrage (92) du volant secondaire (34) sur le volant primaire sont, en outre, prévus.

13. Dispositif d'embrayage/de débrayage selon l'une des revendications 1 à 12, **caractérisé en ce que** le module d'embrayage/de débrayage (22) et l'unité de commande, lorsque celle-ci est portée par ledit module, sont montés avec un jeu axial du côté de l'arbre menant et du côté de l'arbre mené.

14. Dispositif d'embrayage/de débrayage selon l'une des revendications 1 à 12, **caractérisé en ce que** le module d'embrayage/de débrayage et l'unité de commande, lorsque celle-ci est portée par ledit module, sont en appui axial du côté de l'arbre menant.

15. Dispositif d'embrayage/de débrayage selon la revendication 14, **caractérisé en ce que** l'appui axial est assuré par une contrainte exercée sur une pièce flexible (26, 24).

16. Dispositif d'embrayage/de débrayage selon l'une des revendications 13 à 15, **caractérisé en ce qu'**il est prévu un centrage élastique de type radial.

17. Procédé d'assemblage d'un module d'embrayage/de débrayage (22) avec un arbre menant (12) relié à un moteur de véhicule et une boîte de vitesses, **caractérisé en ce qu'**il comporte les étapes suivantes :
- montage et centrage du module d'embrayage/de débrayage (22) sur la boîte de vitesses (18),
- montage sur l'arbre menant (12) d'au moins une pièce de liaison (26) entre le module d'embrayage/de débrayage et l'arbre menant,
- accostage de la boîte de vitesses sur le moteur, ce qui assure le centrage du module d'embrayage/de débrayage (22) sur l'arbre menant,
- fixation du module d'embrayage/de débrayage (22) sur la pièce de liaison (26).

18. Procédé selon la revendication 17, **caractérisé en ce que** la pièce de liaison est flexible.

19. Procédé selon la revendication 17 ou 18, **caractérisé en ce que**, le module d'embrayage/de débrayage (22) portant au moins une unité de commande (74, 76) d'au moins un organe d'embrayage/de débrayage (80, 82) pour l'accouplement et le désaccouplement entre l'arbre menant et l'arbre mené, le centrage du module d'embrayage/de débrayage par rapport à la boite de vitesses est effectué par l'intermédiaire de l'unité de commande qui est centrée sur la boîte de vitesses (18).

## Claims

1. A disengageable clutch apparatus for effecting a coupling between a driving shaft (12) connected to a vehicle engine and at least one driven shaft (14,16) of a gearbox, the apparatus comprising a disengageable clutch module (22) for coupling the driving shaft and driven shaft together and uncoupling them from each other, **characterised in that** the apparatus includes:
- so-called front centring means (90) for centring the disengageable clutch module on the driving shaft, and
- so-called rear centring means (100) for centring the disengageable clutch module on the gearbox, the disengageable clutch module being coupled to the driving shaft, and maintained axially in both directions, by means of this connection.

2. A disengageable clutch apparatus according to Claim 1, **characterised in that** it includes at least one flexible coupling member (26) for coupling the disengageable clutch module with the driving shaft.

3. A disengageable clutch apparatus according to Claim 1 or Claim 2, **characterised in that** the disengageable clutch module carries at least one control unit (74, 76) for controlling at least one disengageable clutch member (80, 82) for effecting coupling and uncoupling between the driving shaft and driven shaft.

4. A disengageable clutch apparatus according to Claim 3, **characterised in that** the control unit is mounted on the module (22) through at least one bearing, and the rear centring means (100) ensure that the control unit is centred at the rear.

5. A disengageable clutch apparatus according to one of Claims 1 to 4, **characterised in that** the rear centring means comprise a centring element fixed at one of its ends (100a) to the gearbox (18), and include at least one chamfered portion (100b).

6. A disengageable clutch apparatus according to Claim 3 or Claim 4, **characterised in that** a means for angular positioning of the control unit is provided.

7. A disengageable clutch apparatus according to Claim 2, **characterised in that** the flexible coupling member is a flexible plate (26) mounted on the driving shaft (12) on the one hand, and on a torque transmitting flywheel (24) of the disengageable clutch module on the other hand.

8. A disengageable clutch apparatus according to Claim 7, **characterised in that** the centring of the disengageable clutch module at the front is ensured by mounting the flexible plate member on the flywheel.

9. A disengageable clutch module according to one of Claims 1 to 7, **characterised in that** the centring of the disengageable clutch module at the front is ensured directly between the said disengageable clutch module and the driving shaft.

10. A disengageable clutch module according to Claim 9, **characterised in that** the front centring means include a centring pad (90) for centring a torque transmission flywheel (24) of the disengageable clutch module.

11. A disengageable clutch module according to one of Claims 1 to 10, **characterised in that** the disengageable clutch module includes a double damping flywheel which comprises a primary flywheel (24) coupled to the driving shaft and a secondary flywheel (34) which is adapted to be coupled to the driven shaft.

12. A disengageable clutch module according to Claim 11, **characterised in that** the primary flywheel (24) is centred on the driving shaft (12), and centring means (92), for centring the second flywheel (34) on the primary flywheel, are further provided.

13. A disengageable clutch apparatus according to one of Claims 1 to 12, **characterised in that** the disengageable clutch module (22) and the control unit, where the latter is carried by the said module, are mounted with an axial clearance on the driving shaft side and on the driven shaft side.

14. A disengageable clutch module according to one of Claims 1 to 12, **characterised in that** the disengageable clutch module and the control unit, where the latter is carried by the said module, are in axial engagement on the driving shaft side.

15. A disengageable clutch apparatus according to Claim 14, **characterised in that** the axial engagement is ensured by an applied stress exerted on a flexible member (26, 24).

16. A disengageable clutch apparatus according to one of Claims 13 to 15, **characterised in that** radial type elastic centring is provided.

17. A method of assembling a disengageable clutch module (22) with a driving shaft (12) which is coupled to a vehicle engine and a gearbox, **characterised in that** it includes the following steps:
- mounting and centring the disengageable clutch module (22) on the gearbox (18),
- mounting at least one coupling member (26) on the driving shaft (12) between the disengageable clutch, module and the driving shaft,
- locating the gearbox on the engine, which ensures centring of the disengageable clutch module (22) on the driving shaft,
- fixing the disengageable clutch module (22) on the coupling member (26).

18. A method according to Claim 17, **characterised in that** the coupling member is flexible.

19. A method according to Claim 17 or Claim 18, **characterised in that**, the disengageable clutch module (22) carries at least one control unit (74, 76) for controlling at least one disengageable clutch member (80, 82) whereby to effect coupling and uncoupling between the driving shaft and the driven shaft, and the centring of the disengageable clutch module with respect to the gearbox is effected by means of the control unit which is centred on the gearbox (18).

## Patentansprüche

1. Vorrichtung zum Einkuppeln/Auskuppeln zwischen einer Antriebswelle (12), die mit einem Kraftfahrzeug-Motor verbunden ist, und wenigstens einer Abtriebswelle (14, 16) eines Getriebes, umfassend ein Einkupplungs/Auskupplungs-Modul (22) für das Einkuppeln und das Auskuppeln zwischen der Antriebswelle und der Abtriebswelle, **dadurch gekennzeichnet, dass** die Vorrichtung Folgendes umfasst:
- vordere Zentrierungsmittel (90) des Einkupplungs/Auskupplungs-Moduls auf der Antriebswelle,
- hintere Zentrierungsmittel (100) des Einkupplungs/Auskupplungs-Moduls auf dem Getriebe, wobei das Einkupplungs/Auskupplungs-Modul mit der Antriebswelle verbunden ist und in beiden Richtungen durch diese Verbindung axial gehalten wird.

2. Vorrichtung zum Einkuppeln/Auskuppeln nach Anspruch 1, **dadurch gekennzeichnet, dass** sie wenigstens ein flexibles Verbindungsstück (26) zwischen dem Einkupplungs/Auskupplungs-Modul und der Antriebswelle umfasst.

3. Vorrichtung zum Einkuppeln/Auskuppeln nach den Ansprüchen 1 oder 2, **dadurch gekennzeichnet, dass** das Einkupplungs/Auskupplungs-Modul wenigstens eine Steuerungseinheit (74, 76) der wenigstens einen Einkupplungs/Auskupplungs-Einrichtung (80, 82) für das Ein- und Auskuppeln zwischen der Antriebswelle und der Abtriebswelle trägt.

4. Vorrichtung zum Einkuppeln/Auskuppeln nach Anspruch 3, **dadurch gekennzeichnet, dass** die Steuerungseinheit mit Hilfe wenigstens eines Lagers auf dem Modul (22) montiert ist, und die hinteren Zentrierungsmittel (100) die hintere Zentrierung der Steuerungseinheit gewährleisten.

5. Vorrichtung zum Einkuppeln/Auskuppeln nach einem der Ansprüche 1 bis 4, **dadurch gekennzeichnet, dass** die hinteren Zentrierungsmittel ein Zentrierungselement tragen, das an einem Ende (100a) am Getriebe (18) fixiert ist, und wenigstens einen abgeschrägten Teil (100b) umfassen.

6. Vorrichtung zum Einkuppeln/Auskuppeln nach einem der Ansprüche 3 und 4, **dadurch gekennzeichnet, dass** ein Mittel zur Winkel-Positionierung der Steuerungseinheit vorgesehen ist.

7. Vorrichtung zum Einkuppeln/Auskuppeln nach Anspruch 2, **dadurch gekennzeichnet, dass** das flexible Verbindungsstück ein flexibles Blech (26) ist, das einerseits auf der Antriebswelle (12) montiert ist und andererseits auf einem Drehmomentübertragungs-Schwungrad (24) des Einkupplungs/Auskupplungs-Moduls montiert ist.

8. Vorrichtung zum Einkuppeln/Auskuppeln nach Anspruch 7, **dadurch gekennzeichnet, dass** die vordere Zentrierung des Einkupplungs/ Auskupplungs-Moduls durch die Montage des flexiblen Blechs auf dem Schwungrad gewährleistet wird.

9. Vorrichtung zum Einkuppeln/Auskuppeln nach einem der Ansprüche 1 bis 7, **dadurch gekennzeichnet, dass** die vordere Zentrierung des Einkupplungs/Auskupplungs-Moduls direkt zwischen dem Einkupplungs/Auskupplungs-Modul und der Antriebswelle gewährleistet wird.

10. Vorrichtung zum Einkuppeln/Auskuppeln nach Anspruch 9, **dadurch gekennzeichnet, dass** die vorderen Zentrierungsmittel eine Zentrierungseinheit (90) eines Drehmomentübertragungs-Schwungrads (24) des Einkupplungs/Auskupplungs-Moduls umfassen.

11. Vorrichtung zum Einkuppeln/Auskuppeln nach einem der Ansprüche 1 bis 10, **dadurch gekennzeichnet, dass** das Einkupplungs/Auskupplungs-Modul ein Zweimassen-Dämpfungs-Schwungrad umfasst, das ein primäres Schwungrad (24) einschließt, das mit der Antriebswelle verbunden ist, und ein sekundäres Schwungrad (34) einschließt, das mit der Abtriebswelle verbunden werden kann.

12. Vorrichtung zum Einkuppeln/Auskuppeln nach Anspruch 11, **dadurch gekennzeichnet, dass** das primärer Schwungrad (24) auf der Antriebswelle (12) zentriert ist, und zudem Zentrierungsmittel (92) des sekundären Schwungrades (34) auf dem primären Schwungrad vorgesehen sind.

13. Vorrichtung zum Einkuppeln/Auskuppeln nach einem der Ansprüche 1 bis 12, **dadurch gekennzeichnet, dass** das Einkupplungs/Auskupplungs-Modul (22) und die Steuerungseinheit, wenn dieselbe von dem Modul getragen wird, antriebswellenseitig und abtriebswellenseitig mit einem axialen Spiel montiert sind.

14. Vorrichtung zum Einkuppeln/Auskuppeln nach einem der Ansprüche 1 bis 12, **dadurch gekennzeichnet, dass** das Einkupplungs/Auskupplungs-Modul und die Steuerungseinheit, wenn dieselbe von dem Modul getragen wird, antriebswellenseitig in axialer Auflage sind.

15. Vorrichtung zum Einkuppeln/Auskuppeln nach Anspruch 14, **dadurch gekennzeichnet, dass** diese axiale Auflage durch eine Spannung gewährleistet wird, die auf ein flexibles Stück (26, 24) ausgeübt wird.

16. Vorrichtung zum Einkuppeln/Auskuppeln nach einem der Ansprüche 13 bis 15, **dadurch gekennzeichnet, dass** eine elastische Zentrierung vom radialen Typ vorgesehen ist.

17. Verfahren zum Zusammenfügen eines Einkupplungs/Auskupplungs-Moduls (22) mit einer Antriebswelle (12), die mit einem Kraftfahrzeug-Motor und einem Getriebe verbunden ist, **dadurch gekennzeichnet, dass** das Verfahren die folgenden Schritte umfasst:
- Montage und Zentrierung des Einkupplungs/Auskupplungs-Moduls (22) auf dem Getriebe (18),
- Montage auf der Antriebswelle (12) wenigstens eines Verbindungsstückes (26) zwischen dem Einkupplungs/Auskupplungs-Modul und der Antriebswelle,
- Ankopplung des Getriebes an den Motor, was die Zentrierung des Einkupplungs/Auskupplungs-Moduls (22) auf der Antriebswelle gewährleistet,
- Befestigung des Einkupplungs/Auskupplungs-Moduls (22) auf dem Verbindungsstück (26).

18. Verfahren nach Anspruch 17, **dadurch gekennzeichnet, dass** das Verbindungsstück flexibel ist.

19. Verfahren nach den Ansprüchen 17 oder 18, **dadurch gekennzeichnet, dass** das Einkupplungs/Auskupplungs-Modul (22) wenigstens eine Steuerungseinheit (74, 76) der wenigstens einen Einkupplungs/Auskupplungs-Einrichtung (80, 82) für das Ein- und Auskuppeln zwischen der Antriebswelle und der Abtriebswelle trägt, wobei das Zentrieren des Einkupplungs/Auskupplungs-Moduls in Bezug auf das Getriebe über die Steuerungseinheit durchgeführt wird, die auf dem Getriebe (18) zentriert ist.
